# EUROPÄISCHE PATENTANMELDUNG

(11) **EP 1 334 792 A1**
(43) Veröffentlichungstag der Anmeldung: **13.08.2003**
(21) Anmeldenummer: 02028903.9
(22) Anmeldetag: 23.12.2002
(51) Int. Cl.: B23K 20/10

(54) **Ultraschallschweissvorrichtung zum verdichtenden Verbinden von elektrischen Leitern**

(30) Priorität: 06.02.2002 DE 10208305
(71) Anmelder: Forschung + Entwicklung Klaus Dobernecker Ing. grad., 63477 Maintal 1 (DE)
(72) Erfinder: Dobernecker, Klaus Eckhart, 63517 Rodenbach 2 (DE)
(74) Vertreter: Wagner, Carsten

(57) **Zusammenfassung**

Vorrichtung zum verdichtenden Verbinden elektrischer Leiter insbesondere in Form von Litzen, umfassend
- eine Schallschwingungen erzeugende Sonotrode (1),
- mindestens eine und der Sonotrode zugeordnete und zu dieser relativ bewegbare Gegenelektrode (2), sowie
- einen zur Aufnahme der Leiter bestimmten Verdichtungsraum (4), wobei
- der zumindest nahezu orthogonal zur Längsachse der zu verbindenden Leiter liegende Querschnitt des Verdichtungsraumes (4) beim verdichtenden Verbinden nur durch die inneren Begrenzungsflächen (6) der Sonotrode (1) und der Gegenelektrode (2) bestimmt wird, und
- zumindest eine innere Begrenzungsfläche (6) aus der Gruppe Sonotrode (1) und Gegenelektrode (2) einen in zur Längsachse der zu verbindenden Leiter zumindest nahezu orthogonaler Richtung zumindest teilweise gekrümmten Verlauf aufweist,
dadurch gekennzeichnet, daß
- die Sonotrode (1) und/oder die Gegenelektrode (2) derart beweglich steuerbar gelagert sind/ist, daß beim Verändern des Querschnittes des Verdichtungsraums (4) mittels Bewegen der Sonotrode (1) und/oder der Gegenelektrode (2) die Sonotrode (1) bzw. die Gegenelektrode (2) bei konstantem Abstand zur inneren Begrenzungsfläche (6) der Gegenelektrode (2) bzw. Sonotrode (1) in zur Längsachse der zu verbindenden Leiter zumindest nahezu orthogonaler Richtung dem Verlauf der inneren Begrenzungsfläche (6) der Gegenelektrode (2) bzw. Sonotrode (1) folgt, so daß zumindest ein Bewegungsvektor der bewegten Sonotrode (1) und/oder Gegenelektrode (2) beim vollständigen Abfahren entlang der gesamten Bewegungsstrecke wenigstens über ein Teilstück in zur Längsachse der zu verbindenden Leiter zumindest nahezu orthogonaler Richtung mindestens zwei orthogonale Vektorkomponenten aufweist.

## Beschreibung

Die Erfindung betrifft eine Vorrichtung und Verfahren zum verdichtenden Verbinden elektrischer Leiter sowie entsprechende Verwendungen.

Aus dem Stand der Technik ist eine Vielzahl von verschiedenen Vorrichtungen bekannt, mit denen elektrische Leiter insbesondere in Form von Litzen verdichtend verbunden werden können.

Hierbei handelt es sich häufig um solche Vorrichtungen, bei denen in einen halboffenen Raum die zu verbindenden Leiter gelegt werden, um anschließend über eine Schallschwingungen erzeugende Sonotrode und eine Gegenelektrode verdichtend verbunden zu werden. Der Verdichtungsraum wird hierbei von den inneren Begrenzungsflächen der Sonotrode, der Gegenelektrode sowie von weiteren Begrenzungselementen definiert.

In EP 0 143 936 B2 wird eine Vorrichtung zum Verbinden bzw. Verdichten elektrischer Leiter in Form von Litzen offenbart, die eine Schallschwingungen erzeugende Sonotrode, mit dieser zugeordneter und zu dieser relativ bewegbarer als Amboß dienender Gegenelektrode sowie einem zur Aufnahme der Leiter bestimmten Verdichtungsraum aufweist, von dem gegenüberliegende Begrenzungsflächen von jeweils zumindest einer Fläche der Sonotrode und des Ambosses gebildet sind, wobei der Verdichtungsraum in seinem Querschnitt in einer ersten Richtung durch Verändern des Abstandes der Fläche von Sonotrode und Amboß einstellbar ist, wobei die verbleibenden gegenüberliegenden Begrenzungsflächen von Begrenzungselementen gebildet sind, von denen zur Veränderung des Querschnittes des Verdichtungsraumes in einer zur ersten Richtung senkrecht verlaufenden Richtung zur Einstellung des Verdichtungsraums auf Leiter unterschiedlicher Querschnitte zumindest ein Begrenzungselement eine verschiebbare bzw. wegkippbare Backe ist.

Nachteilig hieran ist die Tatsache, daß mit den aus dem Stand der Technik bekannten Vorrichtungen lediglich relativ kantige Leiterquerschnitte erhalten werden, die für viele Applikationen aufgrund der späteren sehr beengten Einbauverhältnisse der Leiter wegen des relativ großen Querschnittsflächenbedarfs als nachteilig angesehen werden. Hinzu kommt eine größere Verletzungsgefahr aufgrund des häufig relativ scharfkantigen Leiterquerschnitts.

In EP ist eine Vorrichtung zum Verbinden zweier elektrischer Leiter vorzugsweise in Form von Litzen offenbart, umfassend eine Schall- bzw. Ultraschallschwingungen erzeugende Sonotrode sowie zumindest eine als Amboß dienende Gegenelektrode, wobei die Sonotrode an der Umfangsfläche zumindest eine zu verbindenden Leitern angepaßte Ausnehmung aufweist, die von einer Sonotrodenrandfläche ausgeht, entlang der eine einen der Ausnehmung angepaßten Vorsprung aufweisende Fläche des Ambosses verschiebbar ist und in der die Leiter verbindenden Stellung von Sonotrode und Amboß die Ausnehmung und der zugeordnete Vorsprung eine parallel oder nahezu parallel zur Sonotrodenschwingungsachse verlaufende an seinen Stirnseiten zum Durchführen der Leiter geöffnete einen Verdichtungsraum darstellenden Hohlraum bildet.

Nachteilig an dieser Vorrichtung ist die Tatsache, daß für unterschiedlich große Leiterquerschnitte sowohl Amboß als auch Sonotrode gewechselt bzw. um ihre Achsen gedreht werden müssen, was einen hohen Zeit- und damit verbunden auch Kostenaufwand bedeutet. Für etwaige Zwischengrößen müssen dann in jedem Fall der Amboß sowie die Sonotrode gewechselt werden, was zu hohen unproduktiven Standzeiten führt.

Aus dem vorgenannten ergibt sich das Problem, die oben genannten Nachteile zumindest teilweise zu beseitigen bzw. zu vermeiden. Das sich ergebende Problem besteht insbesondere darin, eine Vorrichtung und Verfahren zum verdichtenden Verbinden elektrischer Leiter insbesondere in Form von Litzen bereitzustellen, bei denen die üblichen relativ scharfkantigen und flächenmäßig ungünstigen Leiterquerschnitte vermieden werden, eine schnelle und unkomplizierte Anpassung an unterschiedliche Leiterquerschnitte möglich ist, wobei die Vorrichtungen nur einen sehr geringen Wartungsaufwand benötigen und die entsprechenden Verfahren sicher, effizient und daher kostengünstig ablaufen.

Dieses Problem wird erfindungsgemäß durch eine Vorrichtung nach Anspruch 1, ein Verfahren nach Anspruch 14 sowie durch Verwendungen nach den Ansprüchen 15 und 16 gelöst.

Die erfindungsgemäße Vorrichtung zum verdichtenden Verbinden elektrischer Leiter insbesondere in Form von Litzen umfaßt eine Schallschwingungen erzeugende Sonotrode, mindestens eine und der Sonotrode zugeordnete und zu dieser relativ bewegbare Gegenelektrode sowie einen zur Aufnahme der Leiter bestimmten Verdichtungsraum, wobei der zumindest nahezu orthogonal zur Längsachse der zu verbindenden Leiter liegende Querschnitt des Verdichtungsraumes beim verdichtenden Verbinden nur durch die inneren Begrenzungsflächen der Sonotrode und der Gegenelektrode bestimmt wird.

Bei der erfindungsgemäßen Vorrichtung weist zumindest eine innere Begrenzungsfläche aus der Gruppe Sonotrode und Gegenelektrode einen in zur Längsachse der zu verbindenden Leiter zumindest nahezu orthogonaler Richtung zumindest teilweise gekrümmten Verlauf auf. Die Sonotrode und/oder die Gegenelektrode sind/ist derart beweglich gelagert, daß beim Verändern des Querschnittes des Verdichtungsraums mittels Bewegen der Sonotrode und/oder der Gegenelektrode die Sonotrode bzw. die Gegenelektrode bei konstantem Abstand (unter dem Begriff "konstant" ist eine vorher festgelegter Wert zu verstehen, der in der Regel bei Litzen maximal dem Litzendurchmesser entspricht, damit ein Verklemmen einzelner Litzen zwischen Sonotrode und Gegenelektrode vermieden wird) zur inneren Begrenzungsfläche der Gegenelektrode bzw. Sonotrode in zur Längsachse der zu verbindenden Leiter zumindest nahezu orthogonaler Richtung dem Verlauf der inneren Begrenzungsfläche der Gegenelektrode bzw. Sonotrode folgt, so daß zumindest ein Bewegungsvektor der bewegten Sonotrode und/oder Gegenelektrode beim vollständigen Abfahren entlang der gesamten Bewegungsstrecke wenigstens über ein Teilstück in zur Längsachse der zu verbindenden Leiter zumindest nahezu orthogonaler Richtung mindestens zwei orthogonale Vektorkomponenten aufweist. Folglich sind innerhalb der sinnvollen Grenzen quasi jede Leiterquerschnitte verarbeitbar ohne Sonotrode und Gegenelektrode wechseln zu müssen.

Es ist von besonderem Vorteil, wenn zumindest eine innere Begrenzungsfläche aus der Gruppe der Sonotrode und Gegenelektrode einen in zur Längsachse der zu verbindenden Leiter zumindest nahezu orthogonaler Richtung unstetigkeitsstellenfreien Verlauf aufweist, um somit scharfkantige Querschnitte der verdichtend verbundenen Leiter zu vermeiden und folglich die Verletzungsgefahr zu vermindern.

Dies gilt insbesondere wenn die Begrenzungsflächen der Sonotrode und/oder der Gegenelektrode in zur Längsachse der zu verbindenden Leiter zumindest nahezu orthogonaler Richtung parabelförmige Verläufe aufweisen, insbesondere wenn mindestens eine Begrenzungsfläche einen in zur Längsachse der zu verbindenden Leiter zumindest nahezu orthogonaler Richtung ellipsoiden Verlauf aufweist. Diese Verläufe gewährleisten, daß die verbundenen Leiterquerschnitte zumindet einen annähernd runden Verlauf aufweisen, der ein besseres Einführen in kleine Öffnungen und Bohrungen ermöglicht. Durch die Tatsache, daß lediglich eine Gegenelektrode verwendet wird, die die zu verbindenden Leiter beim Verdichten quasi hälftig umschließt, ist ein gleichmäßigerer Energiefluß des Ultraschalls und folglich ein homogeneres "Schweißgefüge" zu erhalten. Die Justage der Einzelteile reduziert sich aufgrund der lediglich zwei Spaltmaße (quasi die Abschlüsse des Verdichtungsraums) in der Regel lediglich auf die Ausrichtung der beweglichen Gegenelektrode, da die Sonotrode vorteilhafterweise feststehend und somit auch nur ein Antriebselement notwendig ist.

Das erfindungsgemäße Verfahren gestaltet sich wie folgt: Zunächst werden die zu verbindenden Leiter in einen noch zumindest halboffenen Verdichtungsraum aufgenommen, danach der Verdichtungsraum bezüglich des zumindest nahezu orthogonal zur Längsachse der zu verbindenden Leiter liegenden Querschnittes mittels des Aufeinanderfahrens einer Sonotrode und einer Gegenelektrode geschlossen, der Querschnitt bis zum mechanischen Verdichten der Leiter mittels Aneinandergleitens der Gegenelektrode an der Sonotrode verkleinert, im Anschluß daran die Leiter über die Sonotrode mit Schallschwingungen verbindend beaufschlagt, um schließlich mittels Auseinanderfahrens von Sonotrode und Gegenelektrode die verdichtend verbundenen Leiter freizugeben, wobei eine Vorrichtung gemäß der in den entsprechenden Ansprüchen beanspruchten zweiten Ausführungsform der erfindungsgemäßen Vorrichtung verwendet wird.

Die Spaltmaße der aneinandergleitenden Flächen beträgt in der Regel ca. 10µm.

Damit die enstehenden Leiterquerschnitte hinsichtlich ihrer Ausformung für spätere Applikationen keine Probleme ergeben, ist es von Vorteil, wenn die inneren Begrenzungsflächen in zur Längsachse der zu verbindenden Leiter zumindest nahezu orthogonaler Richtung gleichartige Verläufe aufweisen.

Die nachfolgenden Ausführungsformen haben sich in der Praxis als besonders vorteilhaft herausgestellt:
Die Gegenelektrodenteile und/oder die Sonotrode bestehen aus einem Stahl aus der Gruppe der Kaltarbeitsstähle.

Bei den Kaltarbeitsstählen handelt es sich um solche aus der Gruppe mit folgender Zusammensetzung:
- 1,50 - 1,60 Gew.-% C, 0,10 - 0,40 Gew.-% Si, 0,15 - 0,45 Gew.-% Mn, 11,50-12,50 Gew.-% Cr, 0,60 - 0,80 Gew.-% Mo, 0,90 - 1,10 Gew.-% V, sowie neben geringen Verunreinigungen als Hauptbestandteil Fe,
- 2,00 - 2,25 Gew.-% C, 0,10 - 0,40 Gew.-% Si, 0,15 - 0,45 Gew.-% Mn, 11,00-12,00 Gew.-% Cr, 0,60 - 0,80 Gew.-% W sowie neben geringen Verunreinigungen als Hauptbestandteil Fe.

Um eine reproduzierbare Bewegung der Gegenelektrode entlang der inneren Begrenzungsfläche der Sonotrode zu erhalten, die mechanisch relativ einfach zu bewerkstelligen ist, wird vorteilhafterweise die Gegenelektrode mittels einer Taumelbewegung entlang des in zur Längsachse der zu verbindenden Leiter zumindest nahezu orthogonaler Richtung ausgeprägten Verlaufs der inneren Begrenzungsfläche der Sonotrode geführt.

Hierbei hat es sich in der Praxis in vorteilhafter Weise bewährt, wenn die Gegenelektrode mittels eines über drei synchron laufende Exzenterwellen gesteuerten Drehelementes, insbesondere eine Scheibe, an die die Exzenterwellen angreifen, bewegt wird, insbesondere wenn die Exzenterwellen über Zylinder, insbesondere Pneumatikzylinder (diese werden insbesondere über Preßluft betrieben), angetrieben werden.

Schließlich handelt es sich in vorteilhafter Weise bei mindestens einem Zylinder um einen Tandemzylinder, da auf diese Weise eine stufenweise Anpassung der zu applizierenden Kraft der Sonotrode bzw. des jeweiligen Gegenelektrodenteils auf die zu verdichtenden Leiter bewerkstelligbar ist. Erfmdungemäß ist unter dem Begriff "Tandemzylinder" ein Zylinder zu verstehen, bei dem mindestens zwei Kolben hintereinander auf der gleichen Kolbenstange angeordnet sind.

Die Verwendung einer erfindungsgemäßen Vorrichtung zum Ultraschallschweißen, beispielsweise von Rohren, insbesondere die Verwendung zum Ultraschallschweißen von elektrischen Leitern insbesondere in Form von Litzen weist die oben beschriebenen Vorteile auf.

Die üblicherweise zu applizierenden Kräfte zum Verdichten der Leiter liegt in der Größenordnung von ca. 1000 bis zu mehreren Tausenden Newton, wobei die zu beaufschlagende Energiedichte der Ultraschallwellen, die bezüglich ihrer Frequenz im Bereich von ca. 20 - 40 kHz anzusiedeln sind, in der Größenordnung von etwa 200 J/mm³ liegt.

Die Bewegungssteuerung von Sonotrode und/oder Gegenelektrode wird in der Regel computergestützt mit Hilfe von Schrittmotoren durchgeführt.

Nachfolgend wird ein Ausführungsbeispiel der Erfindung anhand mehrerer Zeichnungen erläutert.

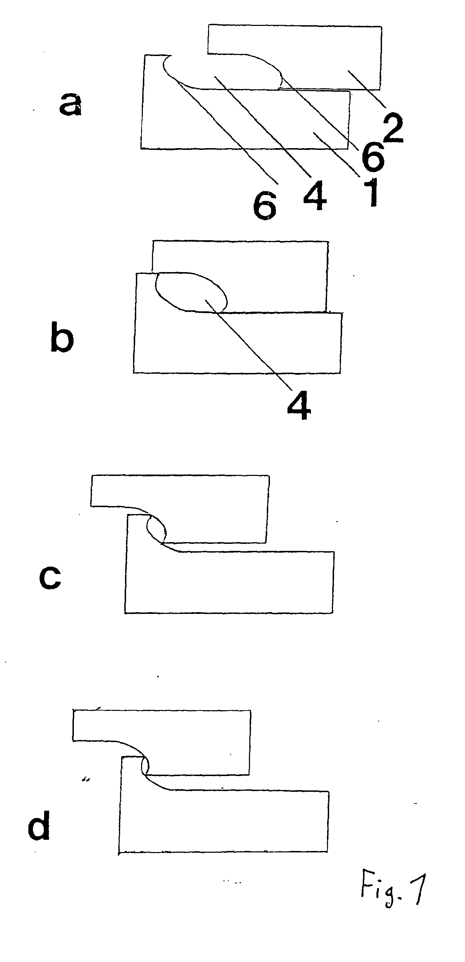

In den Zeichnungen zeigen: Figur 1a - 1d - eine skizzenhafte Querschnittsdarstellung einer Ausführungsform der erfindungsgemäßen Vorrichtung in verschiedenen Stufen des erfindungsgemäßen Verfahrens.

In Figur 1a sind eine Sonotrode 1 und eine Gegenelektrode 2 zu erkennen, die einen halboffenen ellipsoid-förmigen Querschnitt 4 bilden. Die Sonotrode 1 und die Gegenelektrode 2 weisen innere Begrenzungsflächen 6, 6 auf.

Nach Einlegen der zu verbindenden Leiter (diese würden aus der Papierebene herausragen) wird die Gegenelektrode 2 mittels eines Pneumatikzylinders (nicht abgebildet) entlang der inneren Begrenzungsfläche 6 der Sonotrode 1 bis zu einem maximal zugelassenen Spaltmaß von wenigen Mikrometern gefahren, so daß der Verdichtungsraum 4 geschlossen ist (siehe Figur 1b).

Anschließend bewegt sich die Gegenelektrode 2 weiter entlang des Profils der inneren Begrenzungsfläche 6 der Sonotrode 1 nach links oben, wodurch sich der Verdichtungsraum 4 verkleinert (siehe Figur 1c).

Diese Bewegung wird solange fortgesetzt, bis der Verdichtungsraum 4 dem verdichteten Querschnitt der zu verbindenden Leiter entspricht (siehe Figur 1d).

Anschließend wird über die Sonotrode 1 auf die zu verbindenden Leiter entsprechend Ultraschallenergie appliziert, um danach den Verdichtungsraums 4 durch Bewegen der Gegenelektrode 2 nach rechts unten wieder zu öffnen.

## Patentansprüche

1. Vorrichtung zum verdichtenden Verbinden elektrischer Leiter insbesondere in Form von Litzen, umfassend
- eine Schallschwingungen erzeugende Sonotrode (1),
- mindestens eine und der Sonotrode zugeordnete und zu dieser relativ bewegbare Gegenelektrode (2), sowie
- einen zur Aufnahme der Leiter bestimmten Verdichtungsraum (4), wobei
- der zumindest nahezu orthogonal zur Längsachse der zu verbindenden Leiter liegende Querschnitt des Verdichtungsraumes (4) beim verdichtenden Verbinden nur durch die inneren Begrenzungsflächen (6) der Sonotrode (1) und der Gegenelektrode (2) bestimmt wird, und
- zumindest eine innere Begrenzungsfläche (6) aus der Gruppe Sonotrode (1) und Gegenelektrode (2) einen in zur Längsachse der zu verbindenden Leiter zumindest nahezu orthogonaler Richtung zumindest teilweise gekrümmten Verlauf aufweist, **dadurch gekennzeichnet, daß**
- die Sonotrode (1) und/oder die Gegenelektrode (2) derart beweglich steuerbar gelagert sind/ist, daß beim Verändern des Querschnittes des Verdichtungsraums (4) mittels Bewegen der Sonotrode (1) und/oder der Gegenelektrode (2) die Sonotrode (1) bzw. die Gegenelektrode (2) bei konstantem Abstand zur inneren Begrenzungsfläche (6) der Gegenelektrode (2) bzw. Sonotrode (1) in zur Längsachse der zu verbindenden Leiter zumindest nahezu orthogonaler Richtung dem Verlauf der inneren Begrenzungsfläche (6) der Gegenelektrode (2) bzw. Sonotrode (1) folgt, so daß zumindest ein Bewegungsvektor der bewegten Sonotrode (1) und/oder Gegenelektrode (2) beim vollständigen Abfahren entlang der gesamten Bewegungsstrecke wenigstens über ein Teilstück in zur Längsachse der zu verbindenden Leiter zumindest nahezu orthogonaler Richtung mindestens zwei orthogonale Vektorkomponenten aufweist.

2. Vorrichtung nach Anspruch 1, **dadurch gekennzeichnet, daß** zumindest eine innere Begrenzungsfläche aus der Gruppe der Sonotrode und Gegenelektrode einen in zur Längsachse der zu verbindenden Leiter zumindest nahezu orthogonaler Richtung unstetigkeitsstellenfreien Verlauf aufweist.

3. Vorrichtung nach einem der Ansprüch 1 bis 2, **dadurch gekennzeichnet, daß** die Begrenzungsflächen (6) der Sonotrode (1) und/oder der Gegenelektrode (2) in zur Längsachse der zu verbindenden Leiter zumindest nahezu orthogonaler Richtung parabelförmige Verläufe aufweisen.

4. Vorrichtung nach einem der Ansprüche 1 bis 3, **dadurch gekennzeichnet, daß** mindestens eine Begrenzungsfläche (6) einen in zur Längsachse der zu verbindenden Leiter zumindest nahezu orthogonaler Richtung ellipsoiden Verlauf aufweist.

5. Vorrichtung nach einem der Ansprüche 1 bis 4, **dadurch gekennzeichnet, daß** die inneren Begrenzungsflächen (6) in zur Längsachse der zu verbindenden Leiter zumindest nahezu orthogonaler Richtung gleichartige Verläufe aufweisen.

6. Vorrichtung nach einem der Ansprüche 1 bis 5, **dadurch gekennzeichnet, daß** die Gegenelektrode (2) und/oder die Sonotrode (1) aus einem Stahl aus der Gruppe der Kaltarbeitsstähle bestehen.

7. Vorrichtung nach Anspruch 6, **dadurch gekennzeichnet, daß** es sich bei den Kaltarbeitsstählen um solche aus der Gruppe mit folgender Zusammensetzung handelt:
- 1,50 - 1,60 Gew.-% C, 0,10 - 0,40 Gew.-% Si, 0,15 - 0,45 Gew.-% Mn, 11,50-12,50 Gew.-% Cr, 0,60 - 0,80 Gew.-% Mo, 0,90 - 1,10 Gew.-% V, sowie neben geringen Verunreinigungen als Hauptbestandteil Fe,
- 2,00 - 2,25 Gew.-% C, 0,10 - 0,40 Gew.-% Si, 0,15 - 0,45 Gew.-% Mn, 11,00-12,00 Gew.-% Cr, 0,60 - 0,80 Gew.-% W sowie neben geringen Verunreinigungen als Hauptbestandteil Fe.

8. Vorrichtung nach einem der Ansprüche 1 bis 7, **dadurch gekennzeichnet, daß** die Gegenelektrode (2) mittels einer Taumelbewegung entlang des in zur Längsachse der zu verbindenden Leiter zumindest nahezu orthogonaler Richtung ausgeprägten Verlaufs der inneren Begrenzungsfläche (6) der Sonotrode (1) geführt wird.

9. Vorrichtung nach einem der Ansprüche 1 bis 8, **dadurch gekennzeichnet, daß** die Gegenelektrode (2) mittels eines über drei synchron laufende Exzenterwellen gesteuerten Drehelementes bewegt wird.

10. Vorrichtung nach Anspruch 9, **dadurch gekennzeichnet, daß** die Exzenterwellen über Zylinder angetrieben werden.

11. Vorrichtung nach Anspruch 10, **dadurch gekennzeichnet, daß** es sich bei den Zylindern um Pneumatikzylinder handelt.

12. Vorrichtung nach einem der Ansprüche 10 bis 11, **dadurch gekennzeichnet, daß** es sich bei mindestens einem Zylinder um einen Tandemzylinder handelt.

13. Vorrichtung nach einem der Ansprüche 1 bis 12, **dadurch gekennzeichnet, daß** die Sonotrode (1) feststehend ausgebildet ist.

14. Verfahren zum verdichtenden Verbinden elektrischer Leiter insbesondere in Form von Litzen, bei dem zunächst die zu verbindenden Leiter in einen noch zumindest halboffenen Verdichtungsraum (4) aufgenommen werden, danach der Verdichtungsraum (4) bezüglich des zumindest nahezu orthogonal zur Längsachse der zu verbindenden Leiter liegenden Querschnittes mittels des Aufeinanderfahrens einer Sonotrode (1) und einer Gegenelektrode (2) geschlossen wird, der Querschnitt bis zum mechanischen Verdichten der Leiter mittels Aneinandergleitens der Gegenelektrode (2) an der Sonotrode (1) verkleinert wird, im Anschluß daran die Leiter über die Sonotrode (1) mit Schallschwingungen verbindend beaufschlagt werden, um schließlich mittels Auseinanderfahrens von Sonotrode (1) und Gegenelektrode (2) die verdichtend verbundenen Leiter freizugeben,
**dadurch gekennzeichnet, daß**
eine Vorrichtung nach einem der Ansprüche 1 bis 13 verwendet wird.

15. Verwendung einer Vorrichtung nach einem der Ansprüche 1 bis 13 zum Ultraschallschweißen.

16. Verwendung einer Vorrichtung nach einem der Ansprüche 1 bis 13 zum Ultraschallschweißen von elektrischen Leitern insbesondere in Form von Litzen.
